# EUROPEAN PATENT APPLICATION

(11) **EP 4 699 862 A1**
(43) Date of publication of application: **25.02.2026**
(21) Application number: 25174270.6
(22) Date of filing: 05.05.2025
(51) Int. Cl.: B60N 2/75

(54) **WORKING VEHICLE AND ARMREST DEVICE OF WORKING VEHICLE**

(30) Priority: 22.08.2024 JP 2024141191
(71) Applicant: Takeuchi Mfg. Co., Ltd., Nagano 389-0605 (JP)
(72) Inventor: MIYATA, Kazuki, Sakaki-machi, Hanishina-gun, Nagano 389-0605 (JP); SHIOIRI, Yuichi, Sakaki-machi, Hanishina-gun, Nagano 389-0605 (JP)
(74) Representative: Winter, Brandl - Partnerschaft mbB

(57) **Abstract**

An armrest device (60) includes an armrest part (62) and a position adjustment mechanism (64) supporting the armrest part (62) in a position-adjustable manner, the position adjustment mechanism (64) including a first plate (71) immovable in relation to a seat (20), a second plate (72) movable in upward and downward directions in relation to the first plate (71), a third plate (73) movable in forward and backward directions in relation to the second plate (72) and having the armrest part (62) attached, and a fastening member (80) fastening the first, second, and third plates (71), (72), and (73), the fastening member (80) including a screw member (82) inserted in a guide hole (71c) in the first plate (71), a penetration hole (72g) in the second plate (72), and a guide hole (73d) in the third plate (73), and a manually operated knob (84) screwed with the screw member (82).

## Description

### Technical Field

The present invention relates to a working vehicle and an armrest device of a working vehicle.

### Background Art

According to the related art, as an example of a working vehicle, a hydraulic excavator, a track loader or the like having a lower body with a crawler or a tire for traveling installed thereon, an upper body arranged above the lower body, and a working unit which is installed at the lower body or the upper body and operates hydraulically (that is, with a hydraulic oil with a predetermined pressure) is known.

Such a working vehicle has, at the upper body, a cab which a worker (specifically, an operator) can board. Inside the cab, a seat on which the operator sits (operator seat) and an armrest device where the operator sitting on the seat places an elbow are provided.

With respect to the armrest device of the working vehicle, there is a demand that the position of the armrest part should be able to be adjusted according to the physical constitution, preferences and the like of the operator. For example, PTL 1 (JP-U-06-035356) discloses an armrest device having an adjustment mechanism for adjusting the upward and downward position (height) of the armrest part. Specifically, a configuration in which the support leg of the armrest part is provided to be slidable in upward and downward directions in a bracket installed upright in a console box and in which the support leg of the armrest part is fixed to the bracket at any upward and downward position with a fastening member (as an example, a bolt and an axial pin) is employed.

### Summary of Invention

### Technical Problem

However, since the above-described armrest device is configured so that the position of the armrest part can be adjusted only in upward and downward directions, position adjustment in forward and backward directions cannot be performed. Also, since a configuration in which a fastening member must be attached and removed by using a tool (for example, a wrench, a spanner or the like) when adjusting the position of the armrest part is employed, there is a problem in that the work takes a lot of time and effort.

### Solution to Problem

The present invention has been accomplished in view of the above-described circumstances and the objective thereof is to provide an armrest device in which the upward and downward position and the forward and backward position of an armrest part can be easily adjusted, and a working vehicle having this armrest device.

The present invention solves the foregoing problem with a solution described below as one embodiment.

An armrest device according to one embodiment is an armrest device used for an operator sitting on a seat in a cab of a working vehicle to place the operator's elbow, the armrest device including an armrest part and a position adjustment mechanism that supports the armrest part in a way that enables position adjustment thereof, the position adjustment mechanism including a first plate provided to be immovable in relation to the seat, a second plate provided to be movable in upward and downward directions in relation to the first plate, a third plate provided to be movable in forward and backward directions in relation to the second plate and having the armrest part attached thereto, and a fastening member fastening the first plate, the second plate, and the third plate, the fastening member including a screw member inserted in a guide hole formed in the first plate and elongated in the upward and downward directions, a penetration hole formed in the second plate, and a guide hole formed in the third plate and elongated in the forward and backward directions, and a manually operated knob screwed with the screw member.

### Advantageous Effects of Invention

With the armrest device according to the one embodiment, the upward and downward position and the forward and backward position of the armrest part can be easily adjusted.

### Brief Description of Drawings

Fig. 1 is a perspective view showing an example of a working vehicle according to an embodiment of the present invention.
Fig. 2 is a perspective view showing an example of a cab of the working vehicle shown in Fig. 1.
Fig. 3A is a left side view of a left-side armrest device provided in the cab of the working vehicle shown in Fig. 1, and Fig. 3B is a right side view of the same device.
Fig. 4A is a left side view of a right-side armrest device provided in the cab of the working vehicle shown in Fig. 1, and Fig. 4B is a right side view of the same device.
Fig. 5 is an exploded perspective view of the left-side armrest device provided in the cab of the working vehicle shown in Fig. 1.
Fig. 6A is a perspective view of one side of a second plate of the armrest device provided in the cab of the working vehicle shown in Fig. 1, and Fig. 6B is a perspective view of the other side.

### Description of Embodiments

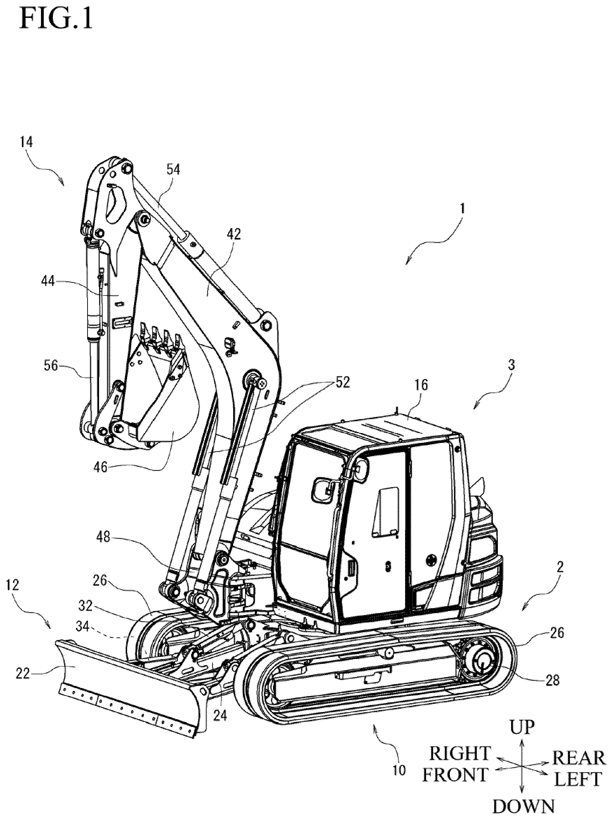

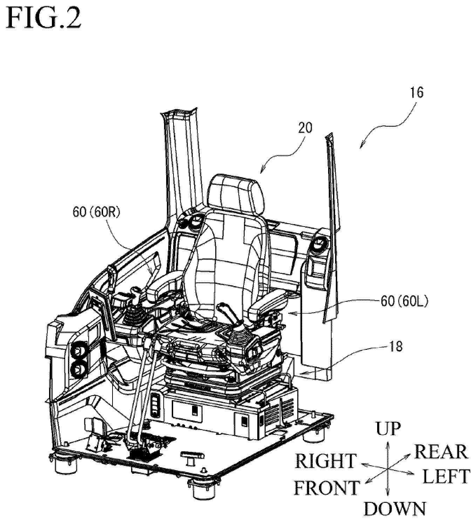

Hereinafter, an embodiment of the present invention will be described in detail with reference to the drawings. Fig. 1 is a perspective view (schematic view) showing an example of a working vehicle 1 according to the present embodiment as viewed from above the left front part. Fig. 2 is a perspective view (schematic view) showing an example of (the inside of) a cab 16 of the working vehicle 1 as viewed from above the left front part. For the sake of convenience of description, in some cases, up (upward) and down (downward), left and right, and front (forward) and rear (backward) directions are indicated by arrows in the drawings. Also, in some cases, where members having the same function are denoted by the same reference sign in all the drawings for describing the embodiment and a repeated description thereof is omitted.

First, the overall configuration of the working vehicle 1 will be described. As an example of the working vehicle 1, a hydraulic excavator will be described. However, the working vehicle 1 is not limited to a hydraulic excavator.

As shown in Fig. 1, the working vehicle 1 has, as a vehicle body, a lower body 2 and an upper body 3 arranged above the lower body 2 (or may have a configuration in which the lower body 2 and the upper body 3 are integrated together).

The working vehicle 1 has working units 12, 14 which are installed at the lower body 2 and the upper body 3 and operate hydraulically (with a hydraulic oil with a predetermined pressure). The lower body 2 has a traveling unit 10 that travels. The upper body 3 has the cab 16 provided with various operation devices with which an operator on board performs operations for traveling and working.

As an example of the traveling unit 10, a pair of left and right crawlers 26 are provided. However, the traveling unit 10 is not limited to the crawlers 26 and may be configured with tires (not illustrated) instead of the crawlers 26. The crawlers 26 are configured to travel by the driving of a traveling hydraulic motor 28. However, the above-described configuration is not limiting.

As an example of the working unit 12, a blade 22 is provided. The blade 22 is installed at the lower body 2 via a blade arm 24 and is configured to be able to swing upward and downward (including forward and backward components) and be able to change the angle thereof. In connection with the blade 22, the upward and downward swing action is performed by the driving of a blade cylinder 32 provided as coupled to the blade 22 and the lower body 2. The angle change action is performed by the driving of an angle cylinder 34 provided as coupled to the blade 22 and the blade arm 24. However, the above-described configuration is not limiting.

As an example of the working unit 14, a boom 42, an arm 44, and an attachable and removable attachment 46 are provided. Fig. 1 illustrates a state where a bucket is installed as the attachment 46. However, this is not limiting and various other kinds of attachments such as a breaker, a fork, and an auger may be provided.

In the present embodiment, the boom 42 is installed at the upper body 3 via a boom bracket 48 and is configured to be able to swing to the left and right (including forward and backward components) and be able to swing upward and downward (including forward and backward components). In connection with the boom 42, the left and right swing action is performed by the driving of a hydraulic cylinder (swing cylinder), not illustrated, that is provided as coupled to the boom 42 and the upper body 3. Also, the upward and downward swing action is performed by the driving of a boom cylinder 52 provided as coupled to the boom 42 and the boom bracket 48. However, the above-described configuration is not limiting and a configuration in which the boom bracket 48 is omitted may be employed.

Also, the arm 44 is attached to the boom 42 so as to be able to swing upward and downward (including forward and backward components). The upward and downward swing action of the arm 44 is performed by the driving of a hydraulic cylinder (arm cylinder) 54 provided as coupled to the arm 44 and the boom 42.

Also, the attachment 46 is attached to the arm 44 so as to be able to swing upward and downward (including forward and backward components). The upward and downward swing action of the attachment 46 is performed by the driving of a hydraulic cylinder (bucket cylinder) 56 provided as coupled to the attachment 46 and the arm 44. As described above, the attachment 46 suitable for the content of working is selected from among a plurality of kinds of attachments and is configured to be attached to the arm 44 in an attachable and removable manner. A configuration in which a quick hitch (not illustrated) is provided between the arm 44 and the attachment 46 may be employed.

A drive mechanism for driving the above-described traveling hydraulic motor 28 and various hydraulic cylinders is configured with a hydraulic pump driven by a drive source, a control valve, and the like, as an example (none of these is illustrated). The operator operates a predetermined operation device to activate the control valve and thus performs control to supply a hydraulic oil with a predetermined pressure sent out from the hydraulic pump to the traveling hydraulic motor 28 and the various hydraulic cylinders. Thus, the traveling by the traveling unit 10 and the working by the working units 12, 14 can be performed. As the hydraulic pump forming the drive mechanism, one or a plurality of hydraulic pumps are provided according to the configurations, loads and the like of the working units 12, 14 and the traveling unit 10.

The working vehicle 1 also has an engine (internal combustion engine that burns fuel) as the above-described drive source. As another example of the drive source, a configuration in which an electric motor (one or a plurality of electric motors according to the number of hydraulic pumps, the rated output, and the like) is provided instead of the engine or along with the engine may be employed (not illustrated).

Next, as an example of the cab 16, a seat (also referred to as an operator seat) 20 on which the operator sits is provided as fixed to a seat mount 18 inside the cab, as shown in Fig. 2. Also, an armrest device 60 where the operator sitting on the seat 20 places an elbow is provided to the left and right of the seat 20. The left-side armrest device 60 is denoted as 60L and the right-side armrest device 60 is denoted as 60R.

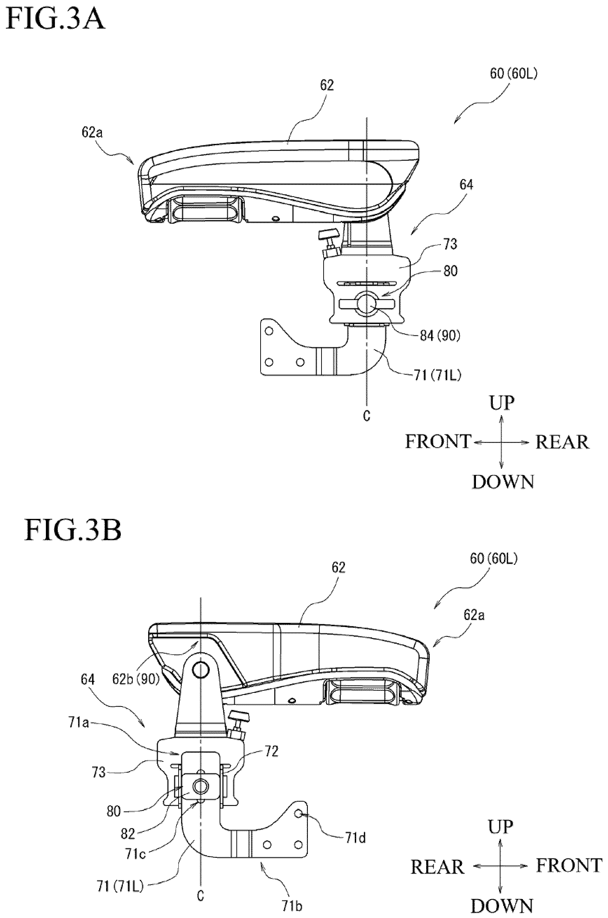

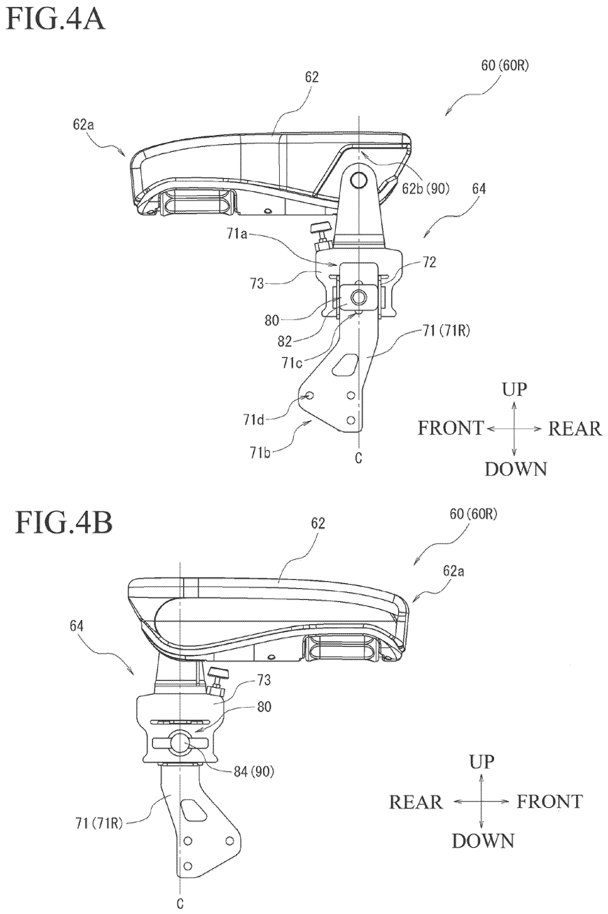

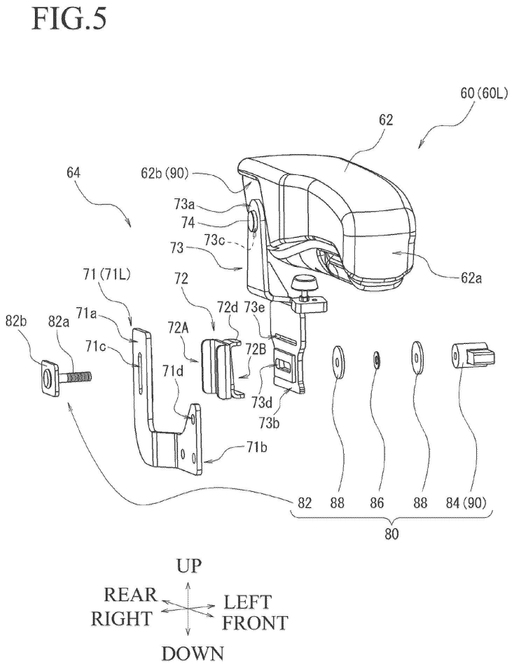

The armrest device 60 that is characteristic to the present embodiment will now be described in detail. Fig. 3A is a left side view of the left-side armrest device 60L, and Fig. 3B is a right side view of the same device. Fig. 4A is a left side view of the right-side armrest device 60R, and Fig. 4B is a right side view of the same device. Fig. 5 is an exploded perspective view of the left-side armrest device 60L. Hereinafter, the left-side armrest device 60L will be described as an example of the armrest device 60, but the right-side armrest device 60R forming left-right symmetry therewith has a similar basic configuration unless stated otherwise.

The armrest device 60 has an armrest part 62 formed in the shape of a saddle for the operator to place an elbow thereon, and a position adjustment mechanism 64 that supports the armrest part 62 in a way that enables position adjustment.

The position adjustment mechanism 64 has a first plate 71 fixed to the seat mount 18 and thus provided to be immovable in relation to the seat 20. The position adjustment mechanism 64 also has a second plate 72 provided to be movable in upward and downward directions in relation to the first plate 71. The position adjustment mechanism 64 also has a third plate 73 provided to be movable in forward and backward directions in relation to the second plate 72 and having the armrest part 62 attached thereto. Moreover, the position adjustment mechanism 64 has a fastening member 80 that fastens the first plate 71, the second plate 72, and the third plate 73.

First, the first plate 71 is formed in a predetermined shape, described later, using a plate material, and an elongated hole-like guide hole (penetration hole) 71c extending in upward and downward directions is formed at an upper end part 71a. Also, a plurality of insertion holes 71d are formed at a lower end part 71b. With this configuration, a fixing member such as a bolt (not illustrated) is inserted in the insertion holes 71d and the first plate 71 is fixed to the seat mount 18 (either by direct fixing or by fixing via another member). That is, the first plate 71 is fixed to be immovable in relation to the seat 20. Also, the fastening member 80 is inserted in the guide hole 71c, thus performing fastening (as described in detail later). Due to the difference in the position where the first plate 71 is attached between the left position and the right position, the first plate 71 (71L) for the left-side armrest device 60 (60L) is configured to have a substantially L-shaped plate surface (see Figs. 3A and 3B), and the first plate 71 (71R) for the right-side armrest device 60 (60R) is configured to have a substantially I-shaped plate surface (see Figs. 4A and 4B), but the above-described basic configuration is the same.

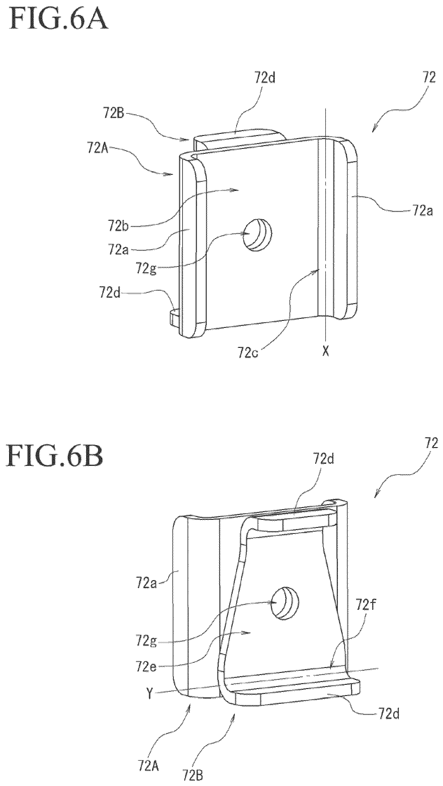

Next, the second plate 72 is formed of a pair of members 72A, 72B fixed together, the members 72A, 72B being formed by bending a plate material into a U-shaped cross section (see Figs. 6A and 6B). Specifically, the members 72A, 72B are arranged into a state where the back surface of one member 72A (the surface where a protruding part 72a due to the bending does not erect) and the back surface of the other member 72B (the surface where a protruding part 72d due to the bending does not erect) are in contact with each other and a state where a direction X along (parallel to) a bend line 72c for causing the protruding part 72a of the one member 72A to erect and a direction Y along (parallel to) a bend line 72f for causing the protruding part 72d of the other member 72B to erect are orthogonal to each other, and the members 72A, 72B are thus fixed together by welding or the like. Moreover, a circular hole-like penetration hole 72g penetrating a center part of the plate surfaces in the state where the pair of members 72A, 72B are fixed together is formed. With this configuration, the fastening member 80 is inserted in the penetration hole 72g, thus performing fastening (as described in detail later). In the present embodiment, the pair of members 72A, 72B are formed in different shapes from each other, but these members may be formed in the same shape.

Next, the third plate 73 is formed by bending a plate material into a substantially S-shaped cross section. At an upper end part 73a, a circular hole-like penetration hole 73c penetrating the plate surface is formed. With this configuration, a coupling pin 74 is inserted in the penetration hole 73c, and the armrest part 62 is thus attached to be rotationally movable (in an example, a rotational movement range is set to be between a position where the upper surface of the armrest part 62 is horizontal and a position where the upper surface of the armrest part 62 is vertical). Also, at a lower end part 73b, an elongated hole-like guide hole (penetration hole) 73d extending in forward and backward directions is formed. Moreover, at a position above the guide hole (penetration hole) 73d, an elongated hole-like engagement hole (penetration hole) 73e extending in forward and backward directions is formed. With this configuration, the fastening member 80 is inserted in the guide hole 73d, thus performing fastening (as described in detail later). Also, the protruding part (as an example, an upper protruding part) 72d of the second plate 72 (member 72B) is slidably engaged with the engagement hole 73e.

Next, the fastening member 80 has a screw member 82 inserted in the guide hole 71c in the first plate 71, the penetration hole 72g in the second plate 72, and the guide hole 73d in the third plate 73, and a manually operated knob 84 screwed with the screw member 82 (that is, configured for the worker to be able to perform a manually tightening rotation operation and a manually loosening rotation operation without using a tool). The screw member 82 according to the present embodiment is formed by fixing a pin 82a threaded on the outer circumferential surface to a rectangular plate 82b (in an example, by welding or the like). Meanwhile, the knob 84 is provided with a cylindrical protrusion on the outer circumferential surface to lay a hand on (in an example, two protrusions at an interval of 180 degrees), and a screw groove to be screwed with the thread on the pin 82a is formed in the axial center.

Here, the assembling structures of the individual members are configured as shown in Figs. 3A and 3B, Figs. 4A and 4B, and Fig. 5. Specifically, the upper end part 71a (peripheral area of the guide hole 71c) of the first plate 71 and the plate 82b of the fastening member 80 are accommodated in a recess part 72b of the second plate 72 (member 72A) (that is, to be fit within the range of the height of the protruding part 72a). Also, since the upper protruding part 72d of the second plate 72 is engaged with the engagement hole 73e in the third plate 73, the lower end part 73b (peripheral area of the guide hole 73d) of the third plate 73 is accommodated in a recess part 72e of the second plate 72 (member 72B) (that is, to be fit within the range of the height of the protruding part 72d).

With the above-described configuration, as the worker performs an operation on the position adjustment mechanism 64, specifically, the tightening rotation operation of the knob 84, the first plate 71, the second plate 72, and the third plate 73 turn into an immovable state in relation to each other and are thus fastened. At this time, the state where the armrest part 62 is fixed at a predetermined position in relation to the seat mount 18 and the seat 20 is created.

Meanwhile, as the worker performs the reverse operation, that is, an operation on the position adjustment mechanism 64, specifically, the loosening rotation operation of the knob 84 (a rotation ranging approximately from a half turn to a full turn is sufficient and a rotation to an extent that separates the screw member 82 and the knob 84 is not needed), the first plate 71, the second plate 72, and the third plate 73 turn into a movable state in relation to each other and the fastening thereof is released. At this time, the first plate 71 is enabled to slide in upward and downward directions in the state where the upper end part 71a thereof is accommodated in the recess part 72b of the second plate 72 (the available range of movement is a range such that the pin 82a of the fastening member 80 moves from the upper end to the lower end in the guide hole 71c in the first plate 71). Also, the third plate 73 is enabled to slide in forward and backward directions in the state where the lower end part 73b thereof is accommodated in the recess part 72e of the second plate 72 (the available range of movement is a range such that the pin 82a of the fastening member 80 moves from the front end to the back end in the guide hole 73d in the third plate 73). Therefore, the armrest device 60 in which the armrest part 62 can be adjusted in position both in upward and downward directions and in forward and backward directions can be implemented with an extremely simple configuration.

In the present embodiment, a configuration in which the protruding part 72d of the second plate 72 having a predetermined length in forward and backward directions is engaged with the elongated hole-like engagement hole 73e in the third plate 73 when fastening the second plate 72 and the third plate 73 together is employed. This configuration has an effect in that, when the third plate 73 is made to slide in forward and backward directions in relation to the second plate 72, the slide operation can be performed smoothly. Moreover, the load applied from the armrest part 62 to the third plate 73 is accepted by the protruding part 72d of the second plate 72 and thus can be prevented from being transferred to the pin 82a of the fastening member 80. Therefore, this has an effect in that the breaking of the thread on the pin 82a can be prevented.

In this way, the worker can manually perform the operations on the position adjustment mechanism 64, specifically, the rotation operations of the knob 84 (the tightening rotation operation and the loosening rotation operation) without using a tool, and therefore the position adjustment of the armrest part 62 can be performed more easily and in a shorter time than with a configuration in which a fastening member (bolt or the like) must be attached and removed using a tool (wrench, spanner or the like) as in the related art. Also, in the present embodiment, since a configuration in which the plate 82b of the screw member 82 is formed in a rectangular shape and is accommodated in the recess part 72b of the second plate 72 is employed, the two forward and backward sides of the plate 82b come into contact with the inner surface of the protruding part 72a of the second plate 72 and co-rotation is thus prevented, when the rotation operations of the knob 84 are performed. Thus, the rotation operations of the knob 84 can be performed with one hand only (that is, without holding the screw member 82 with the other hand) and therefore excellent operability is achieved.

Here, it is evident that if a standard screw thread-groove configuration (meaning not a so-called "reverse-thread screw") is employed in connection with the fastening member 80 (screw member 82, knob 84), the following problem arises. Specifically, if the operator places an elbow at the left-side armrest device 60 (60L) and thus applies a load to the armrest part 62, an action (momentum of rotation) in a direction in which a forward end part 62a of the armrest part 62 goes down is generated. This action (momentum of rotation) generates an action that rotates the knob 84 in contact with the third plate 73 with the armrest part 62 fixed thereto. Since this direction of rotation is the direction of rotation to loosen the left-side knob 84, there is a problem in that the fastening between the members is loosened, causing a position misalignment of the armrest part 62.

In order to solve this problem, in the present embodiment, a locking member (in the present embodiment, it is a disc spring 86 but not limited thereto) is arranged between the knob 84 and a member facing the knob 84 (a component member of the position adjustment mechanism 64, and in the present embodiment, it is the third plate 73 but not limited thereto) in the left-side armrest device 60 (60L). Also, in order to prevent wear and tear due to sliding, the disc spring 86 is arranged in the state of being held between two washers 88, 88. With this configuration, in a configuration in which the direction of the momentum of rotation generated by the application of a load to the upper surface of the armrest part 62 and the direction of rotation to loosen the knob 84 are the same (in the present embodiment, the left-side armrest device 60 (60L)), the knob 84 can be prevented from being rotated in the loosening direction due to the momentum of rotation. A similar configuration in which the disc spring 86 and the washer 88 are arranged may be provided also in the right-side armrest device 60 (60R).

Next, the armrest device 60 has a grip part 90 to be gripped to perform position adjustment at the time of the position adjustment of the armrest part 62, at a position intersecting a centerline C along (parallel to) the upward and downward directions of the guide hole 71c in the first plate 71, as viewed in a side view.

As an example, as shown in Figs. 3B and 4A, a step part 62b provided inside (seat 20 side) of the armrest part 62 is used as the grip part 90. Alternatively, as another example, as shown in Figs. 3A and 4B, the knob 84 of the position adjustment mechanism 64 is used (dual-used) as the grip part 90. With either one of the configurations, since the grip part 90 is arranged on the centerline C of the guide hole 71c in the first plate 71, the occurrence of a problem in that the first plate 71 is caught on the inner surface of the protruding part 72a of the second plate 72 and thus cannot rise up easily at the time of position adjustment (particularly a lift-up) can be prevented (suppressed). Particularly, the knob 84 having a protruding part can be easily gripped and has good operability and can suppress the cost of providing another component (another structure), and is therefore a suitable configuration as the grip part 90.

As described above, it is preferable that the present invention includes the following configurations.
(1) An armrest device according to one embodiment is an armrest device used for an operator sitting on a seat in a cab of a working vehicle to place the operator's elbow, the armrest device including an armrest part and a position adjustment mechanism that supports the armrest part in a way that enables position adjustment thereof, the position adjustment mechanism including a first plate provided to be immovable in relation to the seat, a second plate provided to be movable in upward and downward directions in relation to the first plate, a third plate provided to be movable in forward and backward directions in relation to the second plate and having the armrest part attached thereto, and a fastening member fastening the first plate, the second plate, and the third plate, the fastening member including a screw member inserted in a guide hole formed in the first plate and elongated in the upward and downward directions, a penetration hole formed in the second plate, and a guide hole formed in the third plate and elongated in the forward and backward directions, and a manually operated knob screwed with the screw member.
(2) In the armrest device according to the above aspect (1), it is preferable that a configuration in which a direction of a momentum of rotation generated by a load applied to an upper surface of the armrest part by the worker placing an elbow thereon and a direction of rotation to loosen the knob are the same is provided, and that the fastening member is provided with a locking member between the knob and a member of the position adjustment mechanism that faces the knob.
(3) In the armrest device according to the aspect (2), it is preferable that the locking member is a disc spring.
(4) In the armrest device according to any one of the aspects (1) to (3), it is preferable that the second plate is formed of a pair of members having a U-shaped cross section fixed together in a state of being in contact with each other on back surface thereof and in a state where a direction along a bend line for causing a protruding part of one of the members to erect and a direction along a bend line for causing a protruding part of the other member to erect are orthogonal to each other.
(5) In the armrest device according to any one of the aspects (1) to (4), it is preferable that the armrest part or the position adjustment mechanism has a grip part to be gripped to perform position adjustment at the time of the position adjustment of the armrest part, at a position intersecting a centerline along the upward and downward directions of the guide hole in the first plate, as viewed in a side view.
(6) In the armrest device according to any one of the aspects (1) to (5), it is preferable that the knob is configured to be dual-used as a grip part to be gripped to perform position adjustment at the time of the position adjustment of the armrest part.
(7) A working vehicle according to one embodiment includes the armrest device according to any one of the aspects (1) to (6).

According to the present invention, with respect to the armrest part in the armrest device of the working vehicle, not only the adjustment of the upward and downward position but also the adjustment of the forward and backward position can be performed with a simple mechanism. Moreover, since a worker can perform both these adjustments simply by manual rotation operations of the knob, the position adjustment work for the armrest part can be executed very easily and in a short time and therefore a significant improvement in work efficiency can be achieved.

The present invention is not limited to the above-described embodiment (hydraulic excavator). The present invention can be similarly applied to a working vehicle (track loader or the like) in which an upper body does not swivel in relation to a lower body.

## Claims

1. An armrest device (60) used for an operator sitting on a seat (20) in a cab (16) of a working vehicle (1) to place the operator's elbow, the armrest device (60) comprising:
an armrest part (62) and a position adjustment mechanism (64) that supports the armrest part (62) in a way that enables position adjustment thereof,
the position adjustment mechanism (64) including
a first plate (71) provided to be immovable in relation to the seat (20),
a second plate (72) provided to be movable in upward and downward directions in relation to the first plate (71),
a third plate (73) provided to be movable in forward and backward directions in relation to the second plate (72) and having the armrest part (62) attached thereto, and
a fastening member (80) fastening the first plate (71), the second plate (72), and the third plate (73),
the fastening member (80) including
a screw member (82) inserted in a guide hole (71c) formed in the first plate (71) and elongated in the upward and downward directions, a penetration hole (72g) formed in the second plate (72), and a guide hole (73d) formed in the third plate (73) and elongated in the forward and backward directions, and
a manually operated knob (84) screwed with the screw member (82).

2. The armrest device (60) according to claim 1, comprising:
a configuration in which a direction of a momentum of rotation generated by a load applied to an upper surface of the armrest part (62) by the operator placing the operator's elbow thereon and a direction of rotation to loosen the knob (84) are the same, wherein
the fastening member (80) is provided with a locking member (86) between the knob (84) and a member of the position adjustment mechanism (64) that faces the knob (84).

3. The armrest device (60) according to claim 2, wherein
the locking member (86) is a disc spring.

4. The armrest device (60) according to any one of claims 1 to 3, wherein
the second plate (72) is formed of a pair of members (72A, 72B) having a U-shaped cross section fixed together in a state of being in contact with each other on back surface thereof and in a state where a direction along a bend line (72c) for causing a protruding part (72a) of one of the members (72A) to erect and a direction along a bend line (72f) for causing a protruding part (72d) of the other member (72B) to erect are orthogonal to each other.

5. The armrest device (60) according to any one of claims 1 to 4, wherein
the armrest part (62) or the position adjustment mechanism (64) has a grip part (90) to be gripped to perform position adjustment at the time of the position adjustment of the armrest part (62), at a position intersecting a centerline (C) along the upward and downward directions of the guide hole (71c) in the first plate (71), as viewed in a side view.

6. The armrest device (60) according to any one of claims 1 to 5, wherein
the knob (84) is configured to be also utilized as a grip part (90) to be gripped to perform position adjustment at the time of the position adjustment of the armrest part (62).

7. A working vehicle (1) comprising the armrest device (60) according to any one of claims 1 to 6.
